Europäisches Patentamt

European Patent Office

Office européen des brevets

(11) Publication number: **0 098 646**
A2

## EUROPEAN PATENT APPLICATION

(21) Application number: 83200955.9

(51) Int. Cl.³: **G 05 D 23/02**

(22) Date of filing: 28.06.83

(30) Priority: **05.07.82 BE 1010552**

(71) Applicant: **Leuven Research & Development V.Z.W., Groot Begijnhof No. 59, Benedenstraat, B-3000 Leuven (BE)**

(43) Date of publication of application: **18.01.84 Bulletin 84/3**

(72) Inventor: **Maertens, Jaak, Schaapstraat 4, B-8590 Zwevegem (Heestert) (BE)**

(84) Designated Contracting States: **AT CH DE FR GB IT LI LU NL SE**

(74) Representative: **Vandevelde, Willy et al, N.V. BEKAERT S.A. Industrial Property Department Otegemstraat 83, B-8550 Zwevegem (BE)**

(54) Cold-responsive relay.

(57) A device delivering a movement in response to cold, as an imput signal, generated by the expansion of a cryogenic liquid such as freon, butane or propane. The device comprises a shape memory alloy element located in the stream of the escaping expanded gas and changing from a warm to a cold form when struck by such gas stream. Can for instance be used for commanding a valve or for detecting the level of a cryogenic liquid.

0098646

## COLD-RESPONSIVE RELAY

The invention relates to a relay adapted to deliver a mechanical power output signal in response to cold as an imput signal, this means a relay in which a cold signal triggers off a mechanical movement of sufficient power to drive directly, without any amplification, mechanical control implements such as alarm elements, mechanic switches, hydraulic or pneumatic valves or mechanic brakes.

Cold-sensible relays of the temperature-sensible resistance or semi-conductor type are already known for controlling levels, as shown e.g. in Belgian Patent No. 687,877. This sort of relay, however, requires the presence of electric power, and this is not always possible or desirable in all applications, e.g. for reasons of independence in case of electric defects or explosion danger. In such cases, cold-sensible relays with sufficient output power must be developed. In this respect, relays of the gasor steamcondensor type are known, e.g. from French Patent No. 2,313,707, respectively the international patent application WO 80/00382. But, due to the fact that these relays react through condensation, they can hardly produce a strong and prompt reaction to a cold signal.

According to the invention, the relay comprises a chamber with an expansion-aperture, and a shape-memory alloy element located downstream the said expansion aperture.

When a liquid is contained in a chamber at a pressure above its vapour pressure, and escapes via an expansion-aperture towards an atmosphere at a pressure lower than its vapour pressure, then this expansion of the liquid will cause the sudden evaporation of this liquid, and, consequently, the evaporation heat will be extracted from that liquid and from the environment. The application of this principle in this relay has the advantage that a sudden pronounced temperature signal is generated as a cold signal, which can then directly act on an element of a shape memory alloy which, due to its nature, will also promptly react to this cold signal, and with sufficient output power to drive directly the mechanical control devices.

Shape-memory alloy elements have the property that they can suddenly change their shape, when exceeding a temperature threshold value, and have the original form again when returned to the original temperature.

Such alloys are well known as such. For these alloys it was discovered that, when they are deformed from an original shape in the martensitic state at a temperature below $A_s$ (the starting temperature of the inverse martensitic transformation) to another shape, and then heated to the temperature $A_f$ (the end-temperature of this inverse martensitic transformation), that they recover their original shape either totally or partially. When, however, they are cooled down to below $M_f$ (the end-temperature of the martensitic transformation), then they take again the other shape. This shape-memory effect was discovered in the 1950s with Cu-Zn, Au-Cd and Ni-Ti alloys, and later on many other similar alloys were found, such as ternary and quaternary alloys of Fe, Ni, Cr, Co or Mn. Such alloys were described in the British patents No. 1,315,652 and No. 1,346,046. Also ternary Cu-Al-Zn alloys are known with

$\beta$-structure above the $A_f$-temperature, of which the composition, as shown in a ternary diagram, lies inside the trapezoidal form determined by the four corners, expressed in percentages by weight of Cu, Al, Zn respectively : A (64 ; 1 ; 35), B (74 ; 5 ; 21) , C (87,5 ; 12,5 ; 0) and D (86 ; 14 ; 0).

A "warm" stable form and another one, a "cold" stable form is then given in the following way to a body made of such alloy. Firstly, a stable shape in "warm" state (i.e. a form at a temperature above $M_s$, the starting temperature of the martensitic transformation) is given by means of a heat treatment, e.g. by annealing and quenching. Then the body is brought in "cold" state (i.e. at a temperature below $M_f$), and deformed to a shape which is the stable shape in "cold" state. The transition from one stable state to the other one by heating from $A_s$ to $A_f$ and back from $M_s$ to $M_f$ is reversible when the deformation in cold state has nowhere reached 2 to 4 %, depending upon the alloy, this percentage being the part of deformation which can be recuperated by shape-memory effect. A body, made of such shape-memory alloy and having both stable shapes as explained hereinabove, is called hereinafter a "shape memory alloy element".

The use of a shape memory alloy element on one hand provides sufficient output power. The deformation develops an energy of the order of magnitude of 0,1 Joule per gram. In the form of small rods, the form of highest efficiency when the lengthwise deformation is utilized, it then develops a high force with small displacement, whereas, when in the form of curved strips, it rather develops small forces with large displacement, in such a way that through a correct choice of shape, one can obtain the desired proportion of force to displacement. Preferably, elements are used in the form of a helicoidal spring, of which the stable positions correspond to a long, respectively small pitch of the helicoid.

But, on the other hand, the shape memory alloy also leads to the fact that a sudden cold signal generates also a sudden change of form. But, for this sudden cold signal, a means is needed to generate, in a short time, a sufficient quantity of frigories, and in this relay, this is obtained by the expansion of a "cold-generating liquid" as determined hereinafter.

The choice of the liquid will depend on the ambient temperature and pressure at which the liquid is stored before expansion, in the pressure of the atmosphere in which the liquid is expanded, and on the low temperature which must be reached. In order to have a large cooling effect, liquids with high evaporation heat are preferred. The ambient temperature will, in general, be a room temperature of about 20°C, and the pressure of the atmosphere in which the liquid is made to expand, will in general be the atmospheric pressure. In this most current case, a material will consequently be chosen of which the vapour pressure at room temperature is not too high, e.g. between 3 and 15 ato, and of which the gas phase is stable at the said low temperature and atmospheric pressure. Such substance will consequently have a boiling temperature $(T_c)$ at atmospheric pressure which is a little bit lower than the desired low temperature of 0°C, -30°C or -50°C which one wishes to reach.

Depending upon the application, normal refrigeration materials will be used, such as $CF_3Cl$ ($T_c = -81°C$), $NH_3$ ($T_c = -33°C$), or a hydrocarbon of the type $C_3H_8$ ($T_c = -42°C$), $C_4H_{10}$ ($T_c = -1°C$), $C_2H_6$ ($T_c = -88°C$) or mixtures thereof.

Such substances which can provoke, through sudden expansion from liquid to gas, a pronounced temperature drop of e.g. at least 10°C, but preferably more, are called "cold-generating liquids".

A "chamber" with an "expansion-aperture" for the cold-generating liquid means the following. Generally speaking, a fluid, liquid or gas, which goes from one point at pressure $p_1$ to another point at pressure $p_2$, will undergo a loss of head equal to $p_1-p_2$, which in general is distributed over the path from one point to the other. In order to obtain a sudden expansion, it is necessary that this loss of head is as much as possible concentrated in one point of this path. This is the case when the first point is located inside a walled volume (a "chamber") which has an aperture that gives passage towards the second point outside the chamber, which aperture is at least 10 times, but preferably at least 100 times smaller than the cross-sectional shape of that chamber, taken perpendicularly to the average direction in which the liquid flows away towards the aperture. In this way, a "chamber" can be embodied by a tube with a small aperture at one extremity, in which the loss of head of the flowing liquid is not formed by the hydraulic resistance of the tube, but takes place in the aperture itself.

Care must also be taken that the transition temperature of the used alloy be adapted to the temperature that reached after expansion of the cold-generating liquid. This can be done by using the right shape memory alloy composition as will be explained below. In general such transition temperature will range between 0°C and -50°C.

It must be noted here that the transition of one shape to another in unloaded state does not in general occur at a very precise temperature, but inside a certain temperature range, with possibility of fluctuations and hystereses. But this is of minor importance if the temperature changes fluctuate between a maximum and minimum value, spaced apart more widely than the width of the range (order of magnitude 10°C) which lies around the average transition temperature (called here the "transition temperature").

The invention is further explained here with the help of some figures given by way of example in which :

Figure 1 is a view of a relay directly commanding the valve of a stopcock ;

Figure 2 is a view of a ternary diagram with the aid of which the composition of Cu-Al-Zn shape memory alloy can be found as a function of the desired transition temperature ;

Figure 3 is a detailed view of a relay with a stop-valve in the expansion aperture.

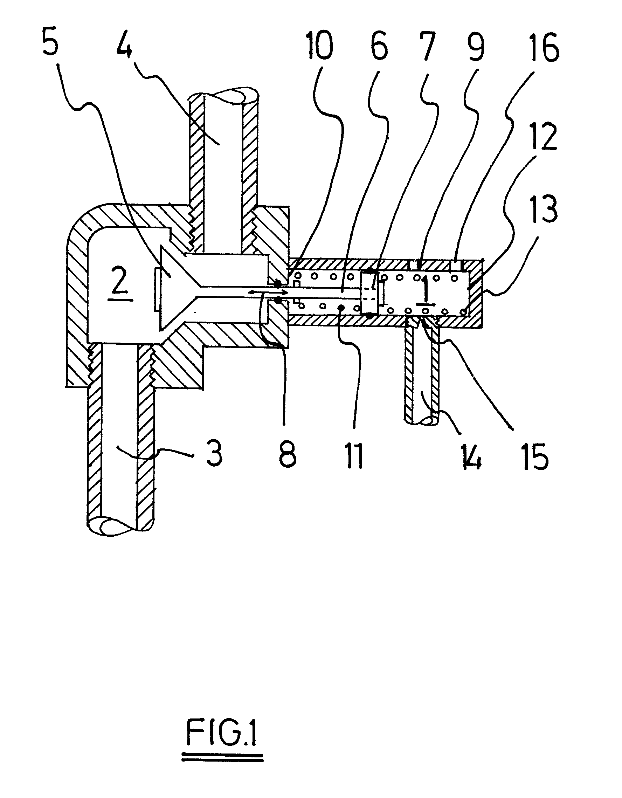

Figure 1 shows the relay 1 which, by way of example, commands a stopcock which has an entrance 3, an exit 4 and a valve 5 between entrance and exit. This valve 5 is mounted at the extremity of a rod 6, of which the other extremity carries a piston 7, and which is slidably mounted in cylinder 9 in the direction of arrows 8, from a left, open position as shown in the figure, to a right position in which the stopcock is closed.

Between the base-plane 10, at the left side of the cylinder 9, and the piston 7, there is a helicoidal steel spring 11 inside the cylinder which tends to move the piston to the right. But, on the other hand, between the base plane 12, at the right side of the cylinder 9, and the piston 7, there is also a helicoidal spring 13 inside the cylinder and made of a Cu-Al-Zn shape memory alloy. The stable shape in warm state is the shape with a long pitch of the helicoid, in such a way that this spring then overcomes the force of spring 11 and keeps the stopcock 2 open. In cold state, however, the stable state is then a form with short pitch, in such a way that this spring 13 does not overcome the force of spring 11 and that it can close the stopcock. The right part of the cylinder, i.e. at the side of the spring 13 made of a shape memory alloy, is connected to an admission tube 14 for the cold-generating liquid, via an expansion-aperture 15 of 1 mm diameter.

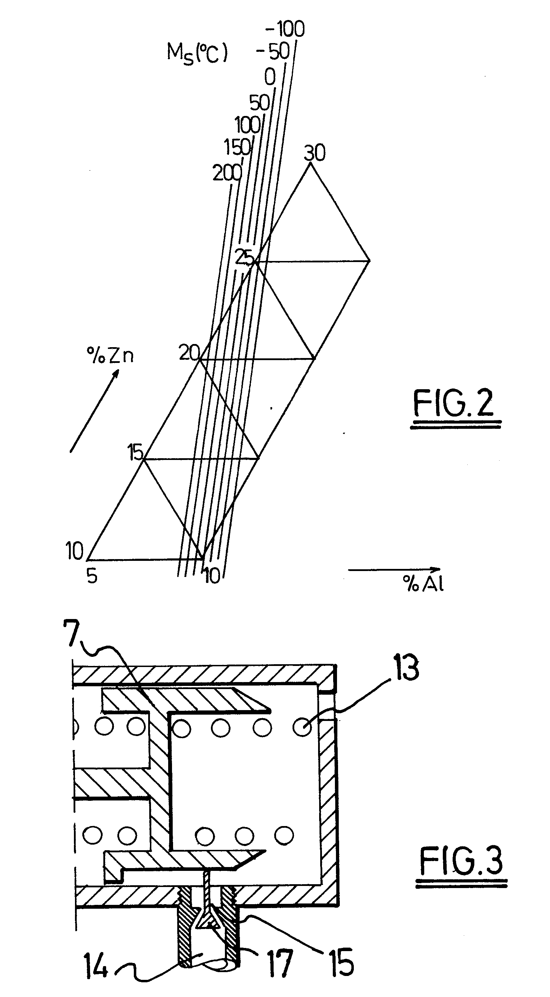

The normal position of the stopcock 2 is the open position. In order to close the latter, the cold-generating liquid, e.g. liquid butane or propane of a mixture of both, is led under pressure towards tube 14. When passing through the aperture, this liquid expands to gas and provokes in the right part of cylinder 9 a temperature drop down to -50°C. Cylinder 9 further comprises a sufficiently large vent 16 towards the surrounding atmosphere in order to guarantee a nearly atmospheric pressure in the right part of the cylinder. The composition of spring 13 is chosen to have a transition temperature around −30°C. For the utilized Cu−Al−Zn alloys, this choice can be made with the help of the ternary diagram of Figure 2, which gives the percentages by weight of Cu and Al and correspond with the indicated $M_s$−transformation temperature.

The expansion−aperture 15 itself can also be provided with a stop−valve 17 (Figure 3) which is commanded for instance by mechanical means. The command−signal can be an independent signal from outside, but can also be furnished by the movement of the relay itself, in which case a means is created to obtain a relay with feedback. As well known in relay− and automation technique, feedback is a means for giving a relay a memory−effect : the relay changes its position under the effect of an external command signal, but when the latter disappears, the relay stays in the assumed position. This is achieved, e.g. when the external signal is a movement (obtained by mechanical, pneumatic or other way) given to the piston 7 (Figure 3) in the direction to the right against the spring 13 made of shape memory alloy. The shape of this piston 7 is such that, when in the right position, it opens the stop−valve 17, provoking the spring 13 to enter its cold state, so losing its pushing force to the left. This results in that the piston remains in its right position. The piston can then be brought back to its initial position to the left by a similar signal, but in the opposite sense.

Figure 1 shows a system with a shape memory alloy element 13 in the form of a helicoidal spring, and with a helicoidal steel spring 11 under compression. The expansion force of the latter is mounted against the expansion of spring 13, but is smaller than the expansion force of spring 13 in its warm stable state. In this state, spring 13 is then in elongated position and spring 11 is compressed. In cold state, the spring 13 will then assume a short shape, by which spring 11 is then allowed to expand. But other combinations are also possible, in which the stable shapes in warm and cold state are either the short or the long form and in which the resilience of the springs does not work in the sense of elongation but of contraction. The springs are not necessarily of helicoidal form, but can have another form, such as the spiral form, of the form of a strip, bent over an angle $\alpha$ , which angle takes two different stable values. However, it is preferable that the relay has a first spring made of shape memory alloy and having a first and second stable position in warm, respectively cold state (i.e. above, respectively below the temperature range in which the change of shape occurs), and further has a second spring, mounted in such a way that the first one, when passing from the warm to the cold state moves the second one into the direction of its resilience or spring-back force, and when passing from the cold to the warm state moves the second one against its resilience.

It is possible, as shown in Figure 1, to use two helicoidal springs, coaxially mounted between two supporting surfaces or platforms 10 and 12 which are at a fixed distance from each other. But the distance can also be made variable by making at least one of both platforms movable and commanded by an external mechanical of pneumatic signal or, in some cases, by a feedback signal.

It is clear that all sorts of combinations of several springs of shape memory alloy can be used, collaborating or not with other springs, with or without feedback, for designing automated systems that respond to cold signals, in combination or not with other signals of mechanical, pneumatic or other nature.

The signal by which the cold-generating liquid is led towards the expansion-aperture, e.g. via tube 14 on Figure 1, can be generated in several ways. The tube 14 can for instance be connected with a tank of such liquid, with a stop-valve between both, which can for instance be commanded by a mechanical end-lever, so that this lever with stop-valve acts as an end-switch which commands the supply of cold-generating liquid towards the relay.

It is, for instance also possible to make the chamber, when in the form of a tube with the expansion-aperture at one of its axial extremities, to debouch with its other axial extremity into a pressure-tank with such cold-generating liquid, but with that extremity at a certain level between maximum and minimum possible level of the liquid in the tank. As long as this level is not reached, it will be the gas phase that enters the tubular chamber and escapes via the expansion-aperture, and then there is no cooling effect. But when the liquid level reaches the mouth of the tubular chamber, it will be the liquid that enters the chamber towards the expansion-aperture, and then the cooling-effect occurs. In this form the relay can be used as liquid level detector.

The invention is not limited to the helicoidal or other shape of the shape-memory alloy element, nor to the shape of the pieces that are put into movement by such element. The shape-memory-alloy element must, however, have been pretreated in order to have two stable positions, one in the cold and one in the warm state. Nor is the invention limited to the exact location where the shape-memory element is mounted with respect to the expansion-aperture, in so far as it is located in the stream of the gas that escapes from the expansion-aperture in order to undergo the cooling-down effect. This element can be mounted either inside a half-closed box or in the free atmosphere.

0098646

CLAIMS :

1. Relay adapted to deliver a mechanic power output-signal in response to cold as an input-signal, characterized by a chamber with an expansion-aperture for a cold-generating liquid, and by a shape memory alloy element located downstream the said expansion-aperture.

2. Relay according to claim 1, characterized in that said chamber has the shape of a tube, with the expansion-aperture at one of its axial extremities.

3. Relay according to any one of claims 1 or 2, characterized in that the said expansion-opening is obturable by means of a controllable stop-valve.

4. Relay according to any one of the preceding claims, characterized in that the shape memory alloy element has the form of a helicoidal spring, of which the stable positions in warm, respectively cold state correspond to a different pitch of the helicoid.

5. Relay according to any one of the preceding claims, characterized in that the shape memory alloy has a transition temperature between 0°C and -50°C.

6. Relay according to any one of the preceding claims, characterized in that the shape memory alloy is a Cu-Al-Zn alloy.

7. Relay according to any one of the preceding claims, characterized in that the shape memory alloy element has the form of a spring with a first and second stable position in warm, respectively cold state, and that the relay further comprises a second spring, mounted in such a way that the first one, when passing from the warm to the cold state, moves the second one in the direction of its resilience, and when passing from the cold to the warm state moves the second one against its resilience.

8. Relay according to claim 7, characterized in that both springs have a helicoidal shape, coaxially mounted between two supporting platforms.

9. Relay according to claim 8, characterized in that at least one of both supporting platforms is movable.

10.Relay according to claim 2, characterized in that the other axial extremity of said tube debouches into a pressure tank for containing said cold-generating liquid at a level between the possible maximum and minimum levels of the liquid in the tank.

11. Relay according to claim 10, characterized in that said tube comprises a controllable stop-valve.

0098646

FIG.1

FIG.2

FIG.3